# EUROPEAN PATENT APPLICATION

(11) **EP 4 760 075 A2**
(43) Date of publication of application: **17.06.2026**
(21) Application number: 25221351.7
(22) Date of filing: 08.12.2025
(51) Int. Cl.: F02B 17/00, F02B 23/06, F02B 23/10

(54) **A PISTON FOR RECIPROCATING WITHIN A CYLINDER IN AN INTERNAL COMBUSTION ENGINE**

(30) Priority: 12.12.2024 US 202418979502
(71) Applicant: Cummins, Inc., Columbus, Indiana 47201 (US)
(72) Inventor: SUKUMARAN, Sujith, Columbus, 47203 (US); KRISHNA CHAITANYA KALVAKALA, Ramachandraiah, Indianapolis, 46237 (US); KARTHIK RAMESH, Aswin, Columbus, 47201 (US)
(74) Representative: Cleveland Scott York

(57) **Abstract**

A piston having a piston body with an upper end opposite a lower end, between which a center axis extends. The piston body includes a piston bowl having a piston bowl surface with a half section profile that includes a central bottom portion and a target side wall that extends between first and second separation cliffs. The central bottom portion extends radially at a central slope from the center axis to the first separation cliff. The target side wall extends at a slope that is different from the central slope. The target side wall receives fuel from a fuel injector at a spray angle that avoids contact with the first separation cliff for better fuel to air mixing to delay peak of combustion rate. The second separation cliff extends at a slope that directs the fuel plume away from and detaches from the second separation cliff for peak combustion.

## Description

### TECHINICAL FIELD

The present application relates generally to a piston reciprocating within a cylinder in an internal combustion engine and more specifically to the piston having a unique piston bowl profile.

### BACKGROUND

A diesel engine has a number of cylinders with a reciprocating piston provided in each cylinder. At an upper end of the piston, a piston bowl is provided. Together with an upper part of the cylinder and a cylinder head, the piston bowl forms a combustion chamber, in which fuel is injected and combusted. The piston bowl is designed to contribute to mixing of air and fuel and to create a flow pattern influencing combustion and emission formation within the combustion chamber. In a diesel engine, the fuel is injected into the combustion chamber as a fuel spray during a power stroke of the piston. The fuel is ignited under the effect of the compression pressure and the compression heat in the combustion chamber shortly after injection.

Further contributions in this area of technology are needed to improve efficiencies of the engine and lower NOx requirements.

### SUMMARY

According to one aspect, a piston for reciprocating within a cylinder in an internal combustion engine, the piston comprising: a piston body having an upper end opposite a lower end, between which a center axis extends, wherein the upper end includes an annular top surface that defines an upper plane, the upper end includes a piston bowl that is recessed relative to the upper plane defined by the annular top surface, wherein the piston bowl includes a piston bowl surface having a half section profile that includes: a central bottom portion that extends radially at a central slope from the center axis to a first separation cliff, the central slope being negative relative to the center axis; wherein the first separation cliff is defined by an intersection of the central bottom portion and a target side wall; wherein the target side wall extends between the first separation cliff and a second separation cliff, wherein the target side wall extends at a slope that is different from the central slope, the target side wall is configured to receive fuel from a fuel injector; and wherein the second separation cliff extends at a slope that is positive relative to the center axis to direct fuel away from the second separation cliff.

In one embodiment, wherein the piston bowl has a bowl radius defined between the center axis and the annular top surface, wherein the first separation cliff is located between 10% to 75% of the bowl radius.

In one embodiment, wherein the piston bowl has a bowl radius defined between the center axis and the annular top surface, wherein the second separation cliff is located between 50% to 90% of the bowl radius.

In one embodiment, wherein the target side wall includes an annular first side wall portion having a length that extends radially outward from the first separation cliff to an inflection point as measured relative to the center axis.

In one embodiment, wherein the first side wall portion includes a vertical portion that extends from the first separation cliff to the inflection point.

In one embodiment, wherein the first side wall portion is located below the central bottom portion as measured relative to the center axis.

The piston of claim 4, wherein the first side wall portion has a slope that is different than the central slope.

In one embodiment, wherein the inflection point defines a lowest point of the piston bowl surface as measured relative to the center axis.

In one embodiment, wherein the inflection point represents a change in direction of slope of the target side wall from a negative slope to a positive slope as measured relative to the center axis.

In one embodiment, wherein the target side wall includes an annular second side wall portion having a length that extends from the inflection point to the second separation cliff.

In one embodiment, wherein the second side wall portion extends at an angle between 70 degrees and 90 degrees from the center axis.

In one embodiment, wherein the second side wall portion has a positive slope relative to the center axis.

This summary is provided to introduce a selection of concepts that are further described below in the illustrative embodiments. This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The concepts described herein are illustrative by way of example and not by way of limitation in the accompanying figures. For simplicity and clarity of illustration, elements illustrated in the figures are not necessarily drawn to scale. Where considered appropriate, references labels have been repeated among the figures to indicate corresponding or analogous elements.
Fig. 1 is a schematic vertical partial section taken along a center axis of a cylinder of a diesel engine according to a first embodiment of the present disclosure.
Fig. 2 is a schematic vertical partial section taken along a center axis of a cylinder of a diesel engine according to a second embodiment of the present disclosure.
Fig. 3 is a schematic vertical partial section taken along a center axis of a cylinder of a diesel engine according to a third embodiment of the present disclosure.
Fig. 4 is a schematic vertical partial section taken along a center axis of a cylinder of a diesel engine according to multiple embodiments of the present disclosure.

### DETAILED DESCRIPTION OF ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, any alterations and further modifications in the illustrated embodiments, and any further applications of the principles of the invention as illustrated therein as would normally occur to one skilled in the art to which the invention relates are contemplated herein.

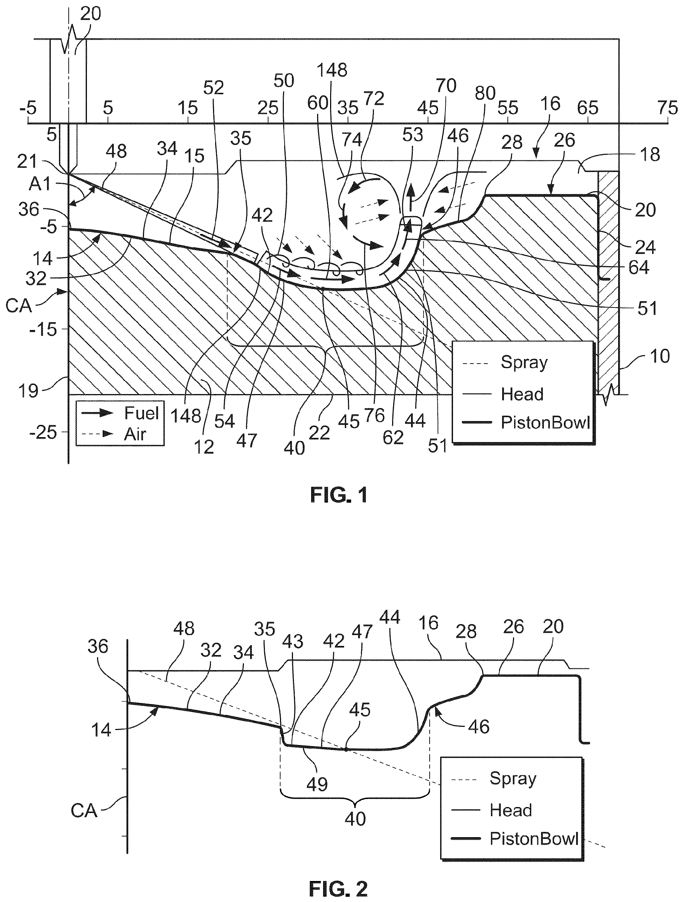

Turning now to the present application with reference to Figs. 1-3, a vertical section taken along a common center axis CA of a cylinder 10 included in a diesel engine according to different embodiments. Similar reference numbers are used for the embodiments illustrated in Figs. 1-3, unless noted otherwise. A piston 12 for reciprocating within a cylinder 10 in an internal combustion engine (not illustrated) is illustrated. In the cylinder 10, the piston 12 is configured to reciprocate within the cylinder 10 along the common center axis CA. The piston 12 includes a piston body 19 having an upper end 20 opposite a lower end 22, between which a center axis CA and a peripheral envelope surface 24 extend. The envelope surface 24 has a circular cylindrical shape. An annular top surface 26 is provided at the upper end 20 of the piston 12. The upper end 20 of the piston 12 includes a piston bowl 14 that is recessed relative to the upper plane defined by the annular top surface 26. The piston bowl 14 is surrounded by the annular top surface 26. The annular top surface 26 has a length that extends from the upper end 20 to an annular edge 28.

Together with internal walls of the cylinder 10 and an internal surface of a cylinder head 16, the piston bowl 14 forms a combustion chamber 18. In some embodiments, the cylinder head 16 assembled with the piston 12 and piston bowl 14 is flat or substantially flat. A fuel injector 20 is mounted to the cylinder head 16 and positioned above the piston bowl 14 in alignment with the center axis CA. Thus, the fuel injector 20 is concentric with the piston bowl 14 and with the cylinder 10. The fuel injector 20 includes a plurality of injection orifices 21, formed at the lower end of a nozzle assembly of the fuel injector 20 for permitting the high pressure fuel to flow from a nozzle cavity of the fuel injector 20 into the combustion chamber 18 with high pressure in order to induce mixing of the fuel with the hot compressed air within the combustion chamber 18. It should be understood that the fuel injector 20 may be any type of fuel injector capable of injecting high pressure fuel through the plurality of injection orifices 21 into the combustion chamber 18. The injection orifices 21 provide a fuel spray 48 at a spray angle A1 relative to the center axis CA onto the piston bowl 14 as described below. The injection orifices 21 of the fuel injector 20 are so arranged that the fuel spray 48 is injected in a direction (illustrated with arrow 52) past a first separation edge or cliff 35 towards an inflection point 45. The fuel spray 48 is injected to spray over or past the first separation edge or cliff 35. The injection orifices 21 of the fuel injector 20 are so arranged that the fuel spray 48 is injected in a direction (illustrated with arrow 52) past a first separation edge or cliff 35 towards an inflection point 45. The fuel spray 48 is injected to spray over or past the first separation edge or cliff 35. The fuel spray 48 is aligned in such a way as to not have any impingement before the first separation edge or cliff 35, but passes over the first separation edge or cliff 35 to induce turbulent eddies. An intake port (not illustrated) may be provided in the cylinder head 16 for supply of air into the combustion chamber 18 via an intake valve (not illustrated). Furthermore, an exhaust port (not illustrated) may be provided in the cylinder head 16 for evacuation of exhaust gases via an exhaust valve (not illustrated). Fuel sources may include diesel, biodiesel, gasoline such as in gasoline compression ignition, or natural gas on high pressure direct injected engines.

In the illustrated embodiment, the piston bowl 14 has a piston bowl surface 15 that forms a piston bowl profile that is rotationally symmetric about the center axis CA and extends from the center axis CA to the annular edge 28. The piston bowl profile controls the compression ratio and the peak combustion. The piston bowl surface 15 and corresponding piston bowl profile of the piston bowl 14 achieves a higher combustion rate to enable better combustion efficiency. The piston bowl surface 15 and corresponding piston bowl profile is optimized for a particular engine power or different operating conditions. The piston bowl surface 15 of the piston bowl 14 comprises a central bottom portion 32, a first separation edge or cliff 35, a second separation edge or cliff 46, and a target side wall 40 positioned between the first and the second separation edges or cliffs 35 and 46, respectively.

The central bottom portion 32 slopes downwards at a central slope 34 from a central point or a top 36 located on the center axis CA to the first separation edge or cliff 35. The central slope 34 may be constant or variable along a length of the central bottom portion 32. Generally, the central slope 34 is a negative slope. The central bottom portion 32 is cone-shaped or convexly curved. The top 36 of the central bottom portion 32 is located at a level below the upper plane defined by the annular top surface 26.

The first separation edge or cliff 35 is the lowest point of the central bottom portion 32. The first separation edge or cliff 35 is separated from the second separation edge or cliff 46 by the target side wall 40 configured to receive the fuel spray 48 from the injection orifice 21 of the fuel injector 20. The first separation edge or cliff 35 enables fuel air mixing due to turbulence generated after the fuel spray 48 encounters the target side wall 40. The first separation edge or cliff 35 does not deflect the fuel spray 48 away from the target side wall 40. The first separation edge or cliff 35 is positioned to increase turbulence and enable better fuel and air mixing as the fuel spray 48 encounters the target side wall 40. A range between 20 to 40% of the radius of the piston bowl surface 15 to locate the first separation edge or cliff 35 relative to the center axis CA is beneficial. In one embodiment, the first separation edge or cliff 35 is about 33% of the radius of the piston bowl surface 15 and corresponding piston bowl profile.

A spray angle A1 of the fuel spray 48 from the injection orifice 21 is shallow and oriented to hit the target side wall 40 just past the first separation edge or cliff 35. The spray angle A1 is measured relative to a centerline of the fuel spray 48. The spray angle A1 does not contact the first separation edge or cliff 35 by about 0.5° to about 5° and in some embodiments is about 1° for optimal results of fuel air mixing when the piston is at top dead center (TDC). The spray angle A1 of the injection orifices 21 is flexible however the fuel spray 48 is oriented to hit the target side wall 40 and avoid and/or minimize any contact with the first separation edge or cliff 35. In one embodiment, the spray angle A1 is between 60 and 80 degrees relative to the center axis CA of the piston 12. The position of the first separation edge or cliff 35 can vary to avoid or minimize any contact with the fuel spray 48 such that the spray angle A1 of the injection orifices 21 aligns the fuel spray 48 to flow past the first separation edge or cliff 35.

The fuel spray 48 flows past or over the first separation edge or cliff by a small angle or distance to then contact the target side wall 40 of the piston bowl 14 to form a plume 148. The target side wall 40 surrounds the central bottom portion 32 and the first separation edge or cliff 35. The target side wall 40 has a length that extends from the first separation edge or cliff 35 to the second separation edge or cliff 46. The length and slope of the target side wall 40 slows combustion of the fuel spray 48 as the fuel spray 48 contacts the target side wall 40. The peak of the combustion rate is delayed by the length of the target side wall 40 and the contact of the fuel spray 48 with the target side wall 40.

After the fuel spray 48 encounters the target side wall 40, the fuel spray 48 forms the plume 148 which generates separated shear layers and re-circulation regions which helps mixing fuel with the air. The shear layers of the plume 148 include a top surface or portion 50 and a bottom portion 51. The first separation edge or cliff 35 enables fuel air mixing due to turbulence created in the top surface or portion 50 plume as well as either side of the plume 148 in the target side wall 40. The top surface or portion 50 of the plume 148 forms fluctuations or turbulence for combustion of the plume 148 into an upper plume due to the change in slope from the first separation edge or cliff 35 to the target side wall 40. The turbulence increases air into pockets of the top surface or portion 50 of the plume 148 or upper plume which aids in combustion and a better air fuel mixture which improves compression performance. The combustion occurs on the top surface or portion 50 and sides of the plume 148, i.e., the upper plume, in the target side wall 40. The bottom portion 51 of the plume 148 maintains contact with the piston bowl surface 15 such that air or oxygen is not introduced between the bottom portion 51 of the plume 148 and the piston bowl surface 15. The bottom portion 51 of the plume 148 travels along the piston bowl surface 15 however air is not able to reach the bottom portion 51 of the plume 148. The target side wall 40 is configured to prevent combustion of the bottom portion 51 of the plume 148 because air and/or oxygen is prevented from reaching the bottom portion 51 of the plume 148. This prevents burning at the bottom portion 51 of the plume 148, whereas the top surface or portion 50 of the plume 148 as well as either side of the top surface or portion 50 will burn. As the hot burning gas is not in touch with the piston 12, the heat loss to the piston 12 during this period is low, improving efficiency. Also, the slower burn rate during this phase helps reduce the NOx production.

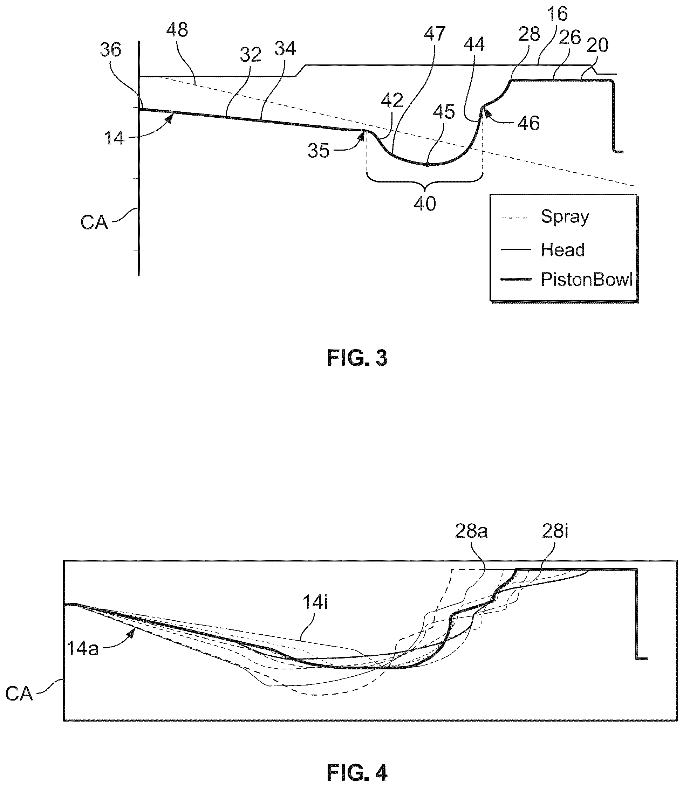

In Fig. 1, the target side wall 40 has an annular first side wall portion 42 having a length that extends downwards and radially outward from the first separation edge or cliff 35 to an inflection point 45 as measured relative to the center axis CA. In Fig. 1, the first side wall portion 42 is concave in shape. In Fig. 2, the first side wall portion 42 includes a vertical portion 43 that extends from the first separation edge or cliff 35 downward to a flatter portion 49 that has less curvature than the first side wall portion 42 in Fig. 1. In Fig. 3, the first side wall portion 42 has a more rounded bowl shape and has more curvature than the first side wall portion 42 in Fig. 1. In any embodiments, the first side wall portion 42 is located at a level below the central bottom portion 32 as measured relative to the center axis CA. The first side wall portion 42 has a slope 47 that is different than the central slope 34. The change in slope from the central slope 34 to the slope 47 at the first separation edge or cliff 35 increases turbulence and enables better fuel and air mixing. The change in slope from the central slope 34 to the slope 47 at the first separation edge or cliff 35 does not deflect the fuel away from the first side wall portion 42 as illustrated by the arrow 54. The momentum of the fuel continues in contact with and along the first side wall portion 42 as illustrated by the arrow 54.

The inflection point 45 defines a lowest level of the piston bowl 14 as measured relative to the center axis CA. The inflection point 45 may be a point or a region of the piston bowl 14 in which a slope of the target side wall 40 changes from a downward direction or negative slope to an upward direction or positive slope as measured relative to the center axis CA. The change in direction of the slope at the inflection point 45 affects the direction of the momentum of the fuel 48 as indicated by arrow 60. The momentum of the fuel 48 remains in contact with the target side wall 40 at the inflection point 45.

The target side wall 40 also has an annular second side wall portion 44 having a length that extends upwards and radially outward from the inflection point 45 to the second separation edge or cliff 46. The second side wall portion 44 is concave in shape for a portion of the length and then extends close to vertical such as an angle between 70 and 90 degrees relative to the center axis CA to the second separation edge or cliff 46. The second side wall portion 44 has a slope 51 that is different than the slope 47 of the first side wall portion 42. The slope 51 is a positive slope. The momentum of the fuel continues in contact with and along the second side wall portion 44 as indicated by arrows 62 and 64.

As the plume 148 continues along the target side wall 40 to the second separation edge or cliff 46 then the entire plume 148 jumps away from the target side wall 40 at the second separation edge or cliff 46 to extend vertically above the second separation edge or cliff 46. The second separation edge or cliff 46 is configured such that the entire plume 148 ignites and detaches from contact with the second separation edge or cliff 46 as illustrated by detachment region or location 53 and arrows 70, 72, 74, and 76. The second separation edge or cliff 46 is the detachment region or location 53 that controls the location of hot spots on cylinder head 16. The second separation edge or cliff 46 controls the peak of combustion rate by using more air available around the plume 148. The second separation edge or cliff 46 is between 70 degrees and 90 degrees relative to the center axis CA. The plume 148 extends vertically towards the cylinder head 16. The plume 148 does not extend towards a cylinder liner (not illustrated). The bottom portion 51 of the plume 148 that was on the target side wall 40 is now vertical and exposed to air and oxygen to combust. The top surface or portion 50 of the plume 148 that was previously exposed to air continues to be exposed to air and combust. The second separation edge or cliff 46 represents the peak of combustion of the plume 148. The second separation edge or cliff 46 enables the plume 148 to receive more air or oxygen, i.e., air from all sides. The reaction ratio or the fuel air ratio improves as the plume 148 jumps or leaves the second separation edge of cliff 46 at the detachment region or location 53. During this time, the piston 12 is also moving downwards. The detached fuel plume 148 will be mixing with fresh oxygen from the squish region and the burn rate will be peaking at this point. After hitting the cylinder head 16, the plume 148 will continue to move in a tumbling motion due to the spray momentum as illustrated by the arrows 72, 74, and 76, which helps soot oxidation.

The second separation edge or cliff 46 controls the timing for occurrence of the peak of the combustion. The combustion peak can be controlled by moving the second separation edge or cliff 46 closer to or further away from the first separation edge or cliff 35. If the second separation edge or cliff 46 is further away from the first separation edge or cliff 35 such that the target side wall 40 has a longer length then there will be more delay in the peak of the combustion. If the second separation edge or cliff 46 is closer to the first separation edge or cliff 35 then the peak of the combustion will occur earlier since the target side wall 40 is shorter in length which results in less delay. The peak of combustion is optimized by moving the second separation edge or cliff 46 relative to the first separation edge or cliff 35 thereby shortening or lengthening the target side wall 40. The peak of the combustion will also impact NOx, i.e., nitric oxide and/or nitrogen dioxide, emissions therefore the piston bowl profile is optimized so that the NOx emission is lowest and/or almost complete oxidation of the NOx emission within the combustion chamber 18 by the end of the cycle.

The piston bowl 14 comprises an upper side wall portion 80 surrounding the second separation edge or cliff 46 and having a length that extends from the second separation edge or cliff 46 to the annular edge 28 of the annular top surface 26. The length and slope of the upper side wall portion 80 can vary.

In Fig. 4, a schematic representation of a plurality of piston bowls 14a-14i wherein each of the piston bowls 14a-14i has a piston bowl surface 15a-15i that forms a piston bowl profile that is rotationally symmetric about the center axis CA and extends from the center axis CA to an annular edge 28a-28i. The piston bowl profile controls the compression ratio and the peak combustion. Each of the plurality of piston bowls 14a-14i also include a first separation edge or cliff 35a-35i and a second separation edge or cliff 46a-46i. Between the first and the second separation edge or cliffs 35a-35i and 46a-46i, respectively, is a target side wall 40a-40i. The location of the first separation edge or cliff 35a-35i can be 10% to 75% of the radius of the piston bowl 14a-14i. As the location of the first separation edge or cliff 35a-35i moves further away from the center axis CA for a corresponding piston bowl profile, the spray angle A1 will also change to increase and thereby avoid contact with the first separation edge or cliff 35a-35i. The location of the second separation edge or cliff 46a-46i can be 50% to 90% of the radius of the piston bowl 14a-14i. The second separation edge or cliff 46a-46i is a higher radius than a radius for the first separation edge or cliff 35a-35i. The length of the target side wall 40a-40i depends on the locations for the first and second separation edge or cliffs 35a-35i and 46a-46i, respectively.

As is evident from the figures and text presented above, a variety of aspects of the present disclosure are contemplated.

Various aspects of the present application are contemplated. According to one aspect, a piston for reciprocating within a cylinder in an internal combustion engine, the piston comprising: a piston body having an upper end opposite a lower end, between which a center axis extends, wherein the upper end includes an annular top surface that defines an upper plane, the upper end includes a piston bowl that is recessed relative to the upper plane defined by the annular top surface, wherein the piston bowl includes a piston bowl surface having a half section profile that includes: a central bottom portion that extends radially at a central slope from the center axis to a first separation cliff, the central slope being negative relative to the center axis; wherein the first separation cliff is defined by an intersection of the central bottom portion and a target side wall; wherein the target side wall extends between the first separation cliff and a second separation cliff, wherein the target side wall extends at a slope that is different from the central slope, the target side wall is configured to receive fuel from a fuel injector; and wherein the second separation cliff extends at a slope that is positive relative to the center axis to direct fuel away from the second separation cliff.

In one embodiment, wherein the piston bowl has a bowl radius defined between the center axis and the annular top surface, wherein the first separation cliff is located between 10% to 75% of the bowl radius.

In one embodiment, wherein the piston bowl has a bowl radius defined between the center axis and the annular top surface, wherein the second separation cliff is located between 50% to 90% of the bowl radius.

In one embodiment, wherein the target side wall includes an annular first side wall portion having a length that extends radially outward from the first separation cliff to an inflection point as measured relative to the center axis.

In one embodiment, wherein the first side wall portion includes a vertical portion that extends from the first separation cliff to the inflection point.

In one embodiment, wherein the first side wall portion is located below the central bottom portion as measured relative to the center axis.

The piston of claim 4, wherein the first side wall portion has a slope that is different than the central slope.

In one embodiment, wherein the inflection point defines a lowest point of the piston bowl surface as measured relative to the center axis.

In one embodiment, wherein the inflection point represents a change in direction of slope of the target side wall from a negative slope to a positive slope as measured relative to the center axis.

In one embodiment, wherein the target side wall includes an annular second side wall portion having a length that extends from the inflection point to the second separation cliff.

In one embodiment, wherein the second side wall portion extends at an angle between 70 degrees and 90 degrees from the center axis.

In one embodiment, wherein the second side wall portion has a positive slope relative to the center axis.

According to another aspect, a piston for an internal combustion engine, the piston comprising: a piston body having an upper end opposite a lower end, between which a center axis extends, wherein the upper end includes a piston bowl surface that defines a piston bowl profile that is rotationally symmetric about the center axis and extends from the center axis to an annular edge, wherein the piston bowl profile includes a target side wall that extends between a first separation cliff and a second separation cliff, wherein the target side wall is configured to receive fuel from a fuel injector at a spray angle such that a fuel spray flows past the first separation cliff.

In one embodiment, wherein the spray angle is between about 0.5° to about 5° from aligning the fuel spray to contact the first separation cliff.

The piston of claim 13, wherein the second side wall portion extends at an angle between 70 degrees and 90 degrees from the center axis.

In one embodiment, wherein the piston bowl profile includes a central bottom portion that extends radially at a central slope from the center axis to a first separation cliff, the central slope being negative relative to the center axis.

In one embodiment, wherein the target side wall includes an annular first side wall portion having a length that extends radially outward from the first separation cliff to an inflection point as measured relative to the center axis, and the target side wall includes an annular second side wall portion having a length that extends from the inflection point to the second separation cliff.

In one embodiment, wherein the inflection point defines a lowest level of the piston bowl as measured relative to the center axis.

In one embodiment, wherein the piston bowl has a bowl radius, wherein the first separation cliff is located between 10% to 50% of the bowl radius.

In one embodiment, wherein the piston bowl has a bowl radius, wherein the second separation cliff is located between 50% to 75% of the bowl radius.

In the above description, certain relative terms may be used such as "up," "down," "upper," "lower," "horizontal," "vertical," "left," "right," "proximal," "distal," and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object.

Reference throughout this specification to "one embodiment," "an embodiment," or similar language means that a particular feature, structure, or characteristic described in connection with the embodiment is included in at least one embodiment of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the present disclosure, however, absent an express correlation to indicate otherwise, an implementation may be associated with one or more embodiments.

The described features, structures, advantages, and/or characteristics of the subject matter of the present disclosure may be combined in any suitable manner in one or more embodiments and/or implementations. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In some instances, the benefit of simplicity may provide operational and economic benefits and exclusion of certain elements described herein is contemplated as within the scope of the invention herein by the inventors to achieve such benefits. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

The present subject matter may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A piston for reciprocating within a cylinder in an internal combustion engine, the piston comprising:
a piston body having an upper end opposite a lower end, between which a center axis extends,
wherein the upper end includes an annular top surface that defines an upper plane, the upper end includes a piston bowl that is recessed relative to the upper plane defined by the annular top surface, wherein the piston bowl includes a piston bowl surface having a half section profile that includes:
a central bottom portion that extends radially at a central slope from the center axis to a first separation cliff, the central slope being negative relative to the center axis;
wherein the first separation cliff is defined by an intersection of the central bottom portion and a target side wall;
wherein the target side wall extends between the first separation cliff and a second separation cliff, wherein the target side wall extends at a slope that is different from the central slope, the target side wall is configured to receive fuel from a fuel injector; and
wherein the second separation cliff extends at a slope that is positive relative to the center axis to direct fuel away from the second separation cliff.

2. The piston of claim 1, wherein
(a) the piston bowl has a bowl radius defined between the center axis and the annular top surface, wherein the first separation cliff is located between 10% to 75% of the bowl radius, or
(b) the piston bowl has a bowl radius defined between the center axis and the annular top surface, wherein the second separation cliff is located between 50% to 90% of the bowl radius, or

3. The piston of claim 1, wherein the target side wall includes an annular first side wall portion having a length that extends radially outward from the first separation cliff to an inflection point as measured relative to the center axis.

4. The piston of claim 3, wherein
(a) the first side wall portion includes a vertical portion that extends from the first separation cliff to the inflection point, or
(b) the first side wall portion is located below the central bottom portion as measured relative to the center axis, or
(c) the first side wall portion has a slope that is different than the central slope.

5. The piston of claim 3, wherein the inflection point defines a lowest point of the piston bowl surface as measured relative to the center axis.

6. The piston of claim 5, wherein the inflection point represents a change in direction of slope of the target side wall from a negative slope to a positive slope as measured relative to the center axis.

7. The piston of claim 3, wherein the target side wall includes an annular second side wall portion having a length that extends from the inflection point to the second separation cliff.

8. The piston of claim 7, wherein
(a) the second side wall portion extends at an angle between 70 degrees and 90 degrees from the center axis, or
(b) the second side wall portion has a positive slope relative to the center axis.

9. A piston for an internal combustion engine, the piston comprising:
a piston body having an upper end opposite a lower end, between which a center axis extends, wherein the upper end includes a piston bowl surface that defines a piston bowl profile that is rotationally symmetric about the center axis and extends from the center axis to an annular edge,
wherein the piston bowl profile includes a target side wall that extends between a first separation cliff and a second separation cliff, wherein the target side wall is configured to receive fuel from a fuel injector at a spray angle such that a fuel spray flows past the first separation cliff.

10. The piston of claim 9, wherein the spray angle is between about 0.5° to about 5° from aligning the fuel spray to contact the first separation cliff.

11. The piston of claim 9, wherein the second side wall portion extends at an angle between 70 degrees and 90 degrees from the center axis.

12. The piston of claim 9, wherein the piston bowl profile includes a central bottom portion that extends radially at a central slope from the center axis to a first separation cliff, the central slope being negative relative to the center axis.

13. The piston of claim 9, wherein the target side wall includes an annular first side wall portion having a length that extends radially outward from the first separation cliff to an inflection point as measured relative to the center axis, and the target side wall includes an annular second side wall portion having a length that extends from the inflection point to the second separation cliff.

14. The piston of claim 13, wherein the inflection point defines a lowest level of the piston bowl as measured relative to the center axis.

15. The piston of claim 9, wherein
(a) the piston bowl has a bowl radius, wherein the first separation cliff is located between 10% to 75% of the bowl radius, or
(b) the piston bowl has a bowl radius, wherein the second separation cliff is located between 50% to 90% of the bowl radius.
